(19) Europäisches Patentamt
European Patent Office
Office européen des brevets

(11) **EP 3 200 143 A1**

(12) **EUROPEAN PATENT APPLICATION**

(43) Date of publication:
**02.08.2017 Bulletin 2017/31**

(51) Int Cl.:
*G06Q 30/06* (2012.01)　　　*G06Q 30/02* (2012.01)

(21) Application number: **17151301.3**

(22) Date of filing: **13.01.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.01.2016 JP 2016006523**

(71) Applicant: **Toshiba TEC Kabushiki Kaisha Tokyo 141-0032 (JP)**

(72) Inventors:
• **WATANABE, Naoki**
  **Shinagawa-ku, Tokyo 141-8562 (JP)**

• **IKUMI, Tomonori**
  **Shinagawa-ku, Tokyo 141-8562 (JP)**
• **TAKAHATA, Masami**
  **Shinagawa-ku, Tokyo 141-8562 (JP)**
• **AOYAMA, Ryuichi**
  **Shinagawa-ku, Tokyo 141-8562 (JP)**
• **OOKUMA, Yumiko**
  **Shinagawa-ku, Tokyo 141-8562 (JP)**

(74) Representative: **Takeuchi, Maya et al Fédit-Loriot 38, avenue Hoche 75008 Paris (FR)**

(54) **GRAPHICAL USER INTERFACE FOR A SELF-REGISTRATION SYSTEM FOR PRODUCTS**

(57)　A non-transitory computer readable medium includes a program that is executable in a product registration server to cause the product registration server to perform a method of carrying out product registration. The method includes the steps of generating a transaction file associated with a customer ID and retrieving a customer record associated with the customer ID, the customer record including a reference ratio therein, registering products in the transaction file in response to user selections, and generating image data of a graphical user interface (GUI) indicating nutrition balance of registered products, and transmitting the generated image data to the user computing device.

*FIG. 1*

**Description**

FIELD

The present invention generally relates to the field of a self-registration technology and, in particular, to a system that carries out product registration based on product IDs obtained through self-scanning of products, and a method for carrying out product registration, a non-transitory computer readable medium comprising a program for carrying out product registration and a computer program product.

BACKGROUND

According to a self-registration system of one type, a customer goes around a sales floor together with a mobile computing device having a wireless communication function and electronically collects identification data of merchandise to be purchased using the mobile computing device. The identification data are wirelessly transmitted from the mobile computing device to a server, and the server processes product registration based on the transmitted data.

In general, the adoption of self-registration systems has not been rapid. Further advancements in user interface technology employed in self-registration systems could increase their adoption rate just as user interface technology employed in smart phones has contributed to the rapid growth of smart phones.

To solve such problems, there is provided a method for carrying out product registration comprising:

responsive to a first command to start product registration, which is wirelessly transmitted from a user computing device along with a customer ID, generating a transaction file associated with the customer ID in a local data storage of the product registration server, and retrieving a customer record associated with the customer ID from a first data storage region, the customer record including a reference ratio therein;
responsive to a second command including a product ID, which is wirelessly transmitted from the user computing device along with the customer ID after the first command, retrieving a product record associated with the product ID from a second data storage region, the product ID including a category ID of the product and an attribute value of the product therein, and registering the product ID in the transaction file;
calculating a first ratio of (A) a sum of attribute values corresponding to registered product IDs associated with one or more category IDs representing particular food categories to (B) a sum of attribute values corresponding to registered product IDs associated with category IDs representing all food categories, and adding the calculated first ratio to the transaction file;

calculating a second ratio of (C) the first ratio to (D) the reference ratio, and adding the calculated second ratio to the transaction file; and
generating image data of a graphical user interface (GUI) indicating nutrition balance of registered products at least based on the second ratio in the transaction file, and transmitting the generated image data to the user computing device.

Preferably, the attribute value represents the number of calories in the corresponding product.

Preferably still, the method further comprises:

responsive to a setting command, which is wirelessly transmitted from the user computing device along with the customer ID, generating image data of a second GUI that indicates the reference ratio and includes one or more selectable objects to designate a new reference ratio, and transmitting the image data of the second GUI to the user computing device.

Preferably yet, the method further comprises:

responsive to a user selection of a selectable object in the second GUI, updating the reference ratio included in the customer record to the new reference ratio corresponding to the selectable object.

Suitably, the method further comprises:

responsive to a third command to close the product registration, which is wirelessly transmitted from the user computing device along with a point-of-sale (POS) terminal ID, transmitting data in the transaction file to a POS identified by the POS terminal ID, and registering the first ratio and a date when the transaction file was generated in a transaction history record associated with the customer ID.

Suitably still, the method further comprises:

responsive to a setting command, which is wirelessly transmitted from the user computing device along with the customer ID, retrieving the registered first ratio and the date from the transaction history record, and generating image data of a third GUI that indicates the registered first ratio and the date.

The invention also relates to a non-transitory computer readable medium comprising a program that is executable in a product registration server to cause the product registration server to perform the method for carrying out product registration as defined above.

The invention further relates to a computer program product storing executable code for the method for carrying out product registration as defined above.

The invention also concerns a self-registration system comprising:

a product registration server;
a user computing device in communication with the product registration server; and
a plurality of point-of-sale terminals in communication with the product registration server, wherein the product registration server is configured to carry out product registration by performing the steps of:

responsive to a first command to start product registration, which is wirelessly transmitted from a user computing device along with a customer ID, generating a transaction file associated with the customer ID in a local data storage of the product registration server, and retrieving a customer record associated with the customer ID from a first data storage region, the customer record including a reference ratio therein;
responsive to a second command including a product ID, which is wirelessly transmitted from the user computing device along with the customer ID after the first command, retrieving a product record associated with the product ID from a second data storage region, the product record including a category ID of the product and an attribute value of the product therein, and registering the product ID in the transaction file;
calculating a first ratio of (A) a sum of attribute values corresponding to registered product IDs associated with one or more category IDs representing particular food categories to (B) a sum of attribute values corresponding to registered product IDs associated with category IDs representing all food categories, and adding the calculated first ratio to the transaction file;
calculating a second ratio of (C) the first ratio to (D) the reference ratio, and adding the calculated second ratio to the transaction file;
generating image data of a graphical user interface (GUI) indicating nutrition balance of registered products at least based on the second ratio in the transaction file, and transmitting the generated image data to the user computing device; and
responsive to a third command to close the product registration, which is wirelessly transmitted from the user computing device along with a point-of-sale (POS) terminal ID, transmitting data in the transaction file to a POS identified by the POS terminal ID, and registering the first ratio and a date when the transaction file was generated in a transaction history record associated with the customer ID.

## DESCRIPTION OF THE DRAWINGS

The above and other objects, features and advantages of the present invention will be made apparent from the following description of the preferred embodiments, given as non-limiting examples, with reference to the accompanying drawings, in which:

FIG. 1 is a block diagram of a shopping support system according to an embodiment.
FIG. 2 is a flowchart illustrating a sequence of information processing that a processor of a user terminal performs according to a terminal program.
FIG. 3 is a flowchart illustrating another sequence of the information processing that the processor of the user terminal performs according to the terminal program.
FIG. 4 is a flowchart illustrating a sequence of information processing that a processor of a support server performs according to a server program.
FIG. 5 is a flowchart illustrating another sequence of the information processing that the processor of the support server performs according to the server program.
FIG. 6 is a flowchart illustrating a sequence of information processing that a processor of a POS terminal performs according to a control program.
FIG. 7 illustrates screen transition of screens displayed on a touch panel of the user terminal.
FIG. 8 illustrates another example of a screen displayed on the touch panel of the user terminal.

## DETAILED DESCRIPTION

An embodiment provides a shopping support system which can support shopping of healthy food products by.

In general, according to an embodiment, a non-transitory computer readable medium comprises a program that is executable in a product registration server to cause the product registration server to perform a method of carrying out product registration. The method includes the steps of: responsive to a first command to start product registration, which is wirelessly transmitted from a user computing device along with a customer ID, generating a transaction file associated with the customer ID in a local data storage of the product registration server, and retrieving a customer record associated with the customer ID from a first data storage region, the customer record including a reference ratio therein; responsive to a second command including a product ID, which is wirelessly transmitted from the user computing device along with the customer ID after the first command, retrieving a product record associated with the product ID from a second data storage region, the product record including a category ID of the product and an attribute value of the product therein, and registering the product ID in the transaction file; calculating a first ratio of (A) a sum of attribute values corresponding to registered product IDs associated with one or more category IDs representing particular food categories to (B) a sum of attribute values corresponding to registered product IDs associated with category IDs representing all food categories, and adding the calculated first ratio to the transaction file; calculating a second ratio of (C) the first ratio to (D) the reference ratio, and adding the calculated second ratio to the transaction file; and generating image data of a graphical user interface (GUI) indicating nutrition balance of registered products at least based on the second ratio in the transaction file, and transmitting the generated image data to the user computing device.

Hereinafter, embodiments of a shopping support system will be described with reference to the accompanying drawings.

According to the embodiments, a system supports a shopper so as to do shopping of health stuff in a store, such as a supermarket.

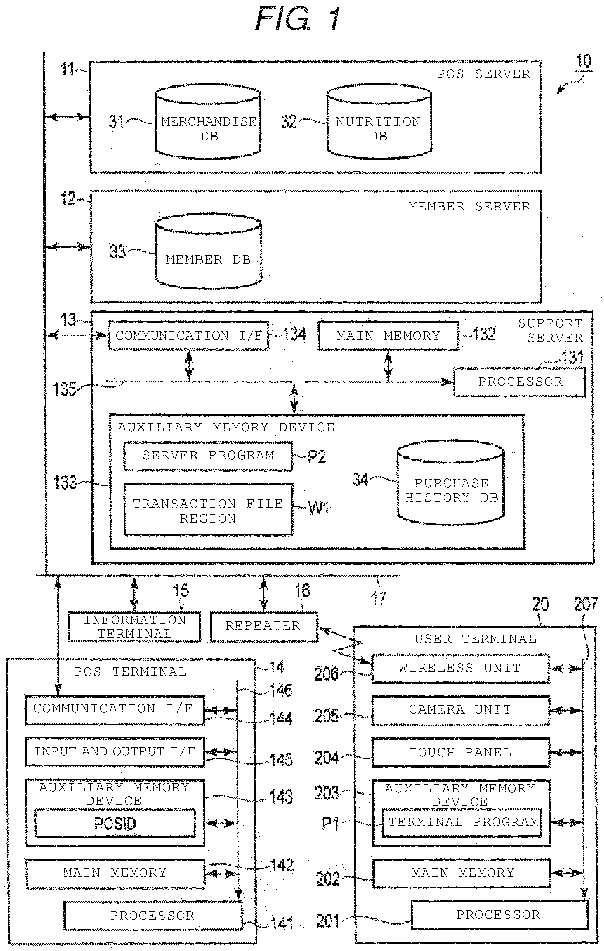

FIG. 1 is a block diagram of a shopping support system 10 according to an embodiment. The shopping support system 10 includes a point of sales (POS) server 11, a member server 12, a shopping support server (hereinafter, referred to as a support server) 13, a POS terminal 14, an information terminal 15, a repeater 16, and a network 17 such as a local area network (LAN). Each of the servers 11, 12, and 13 is connected to the POS terminal 14, the information terminal 15, and the repeater 16 through the network 17. The network 17 may be, for example, a wired LAN, or a wireless LAN. The repeater 16 performs wireless data communication with a user terminal 20 which is carried by a shopper.

The shopping support system 10 is located in a store which sells food. As a shopper registers data of merchandise to be purchased by operating the user terminal 20, the shopping support system 10 evaluates whether or not healthy food products with excellent nutrition balance are purchased, and supports the shopper so as to do shopping of healthy stuff. In addition, as the shopper registers the data of the merchandise by operating the user terminal 20, the shopping support system 10 can simplify registration operation of the POS terminal 14.

The respective servers 11, 12, and 13 are located in, for example, an office of a store. If the respective servers 11, 12, and 13 can perform data communication with the POS terminal 14, the information terminal 15, and the repeater 16, a place where the respective servers 11, 12, and 13 are located is not limited in particular. The respective servers 11, 12, and 13 may be located in an arbitrary place other than the store. Functions of the respective servers 11, 12, and 13 may be implemented by, for example, cloud computing on Internet.

The POS terminal 14 is located in, for example, a checkout space (cash register) of a store. The POS terminal 14 registers sale data of merchandise (purchased merchandise) to be purchased by a shopper. Price of the merchandise is calculated by register processing. In addition, the POS terminal 14 performs settlement processing (payment processing) for the merchandise. The settlement processing includes the settlement processing for cash payment and settlement processing for credit payment. Since the registration processing and the settlement processing are well-known processing, detailed description thereof will be omitted.

The POS terminal 14 is generally operated by a salesperson called a cashier. The POS terminal 14 may be operated by the shopper. In addition, a registration unit which performs the registration processing and a settlement unit which performs the settlement processing are separately provided, and a semi-self system may be employed in which a salesperson operates the registration unit and a shopper operates the settlement unit.

The information terminal 15 is located near, for example, a sales floor (sales space) or a doorway of the store. The information terminal 15 includes a touch panel which is a man-machine interface (I/F), and the shopper uses the information terminal so as to obtain required service information. The information terminal 15 includes a scanner for reading a barcode. The information terminal 15 may include a printer.

The repeater 16 is located in, for example, the sales floor of the store. The repeater 16 provides a wireless communication network between itself and the user terminal 20 carried by the shopper during shopping in the sales floor. In addition, the repeater 16 receives a wireless data signal which is output from the user terminal 20, and transmits the wireless data signal to any one of the servers 11, 12, and 13 through the network 17. In addition, the repeater 16 converts a data signal received from any one of the servers 11, 12, and 13 into a wireless data signal, and transmits the wireless data signal to the user terminal 20.

The user terminal 20 is a computer having a wireless communication function. The user terminal 20 is used by a shopper when the shopper does shopping in the store. For example, a smart phone, a tablet terminal, a mobile phone, or the like is used as the user terminal 20.

In FIG. 1, the numbers of the POS terminal 14, the information terminal 15, the repeater 16, and the user terminal 20 are respectively one, but the number is not limited to one. Typically, the shopping support system 10 includes two or more POS terminals 14, two or more information terminals 15, and two or more repeaters 16 connected to the network 17. In addition, the user terminal 20 is carried by each shopper. Accordingly, the repeater 16 can simultaneously transmit wireless data signals between itself and multiple user terminals 20.

The POS server 11 includes a merchandise database (DB) 31 and a nutrition DB 32.

The merchandise DB 31 stores a merchandise record which is created for each piece of merchandise. Merchandise is not limited to food. The merchandise record of merchandise other than food can be stored in the merchandise DB 31. The POS server 11 accesses the merchandise DB 31 so as to perform reading or writing of the merchandise record.

The merchandise record includes a merchandise ID, a classification ID, a merchandise name, a unit price, a weight, and the like. The merchandise ID is a unique code assigned to each kind of merchandise for identification of the merchandise. The classification ID is a unique code assigned to each classification for identification of the classification. The classification include "cereals", "beans", "meat", "seafood", "seaweed", "vegetables", "fruits", "mushrooms", "dairy products", and the like, for food products. The merchandise name is a name of merchandise identified by the merchandise ID. The unit price is a price of the merchandise, and the weight is an average weight of the merchandise.

The nutrition DB 32 stores a nutrition record which is created for each kind of merchandise with respect to merchandise that is classified as food. The POS server 11 accesses the nutrition DB 32 so as to perform reading or writing of the nutrition record.

The nutrition record includes the merchandise ID, a pair of data of N ($N \geq 2$) nutrient IDs and a component numerical value, and the like. The nutrient ID is a unique ID assigned to each nutrient for identification of the nutrient. The component numerical value is a value of a nutrition component identified by the nutrition ID. For example, in a case of food that amounts to 30 kcal and includes protein of 14 g, the nutrition record which includes a pair of data of the nutrient ID of calorie and the component numerical value of 30 kcal, and a pair of data of a nutrient ID of protein and the component numerical value of 14 g, are stored in the nutrition DB 32.

The member server 12 includes a member DB 33.

The member DB 33 stores a member record which is created for each member. The member server 12 accesses the member DB 33 so as to read or write the member record.

The member record includes a member ID, personal data, an evaluation category, an item number n, an item ID corresponding to the item number n, a reference ratio, and the like. The member ID is a unique code assigned to each member for identification of the member. The personal data include a name of the member, sex, age, and the like of the member.

The evaluation category enables a member identified by the corresponding member ID to classify whether the member prefers evaluation on whether or not shopping of healthy food with excellent nutrition balance are done, based on food category, or based on nutrients of foods. In the present embodiment, the evaluation category is set as "1" if the evaluation is performed based on food category, and the evaluation category is set as "2", if the evaluation is performed based on nutrients.

The item number n is the number of categories of foods or the number of nutrients of foods that are referred to when the shopping are evaluated. When the evaluation category is "1", that is, if the evaluation is performed based on the food category, the classification IDs of the item number n are set as item IDs. When the evaluation category is "2", that is, if the evaluation is performed based on nutrients, the nutrient IDs of the item number n are set as item IDs.

The member previously determines whether the food category or nutrients are used as a basis (hereinafter, referred to as an evaluation basis of shopping) of the evaluation on whether or not shopping of healthy stuff with excellent nutrition balance is done. In addition, a member who selects the food category as the evaluation basis selects one or more classification IDs of food categories that the member wants to intake for health. If nutrients are selected as the evaluation basis, one or more nutrient IDs that the member wants to intake for health is selected. As a result, for example, the member record in which the evaluation category is set as "1", the item number n is set as "2", and the classification ID of vegetables and the classification ID of mushrooms are set as the item IDs, is stored in the member DB 33 for a member who wants to intake vegetables and mushrooms for health. For example, the member record in which the evaluation category is set as "2", the item number n is set as "1", and the nutrient ID of iron is set as the item ID, is stored in the member DB 33 for a member who wants to intake iron for health.

In the above description, it is assumed that each member determines the evaluation basis, but a default evaluation basis may be set. Generally, it is preferable that much intake of vegetables or fruits is performed from a viewpoint of nutrition balance. Hence, vegetables and fruits are set as default food categories. In addition, only the member who wants an evaluation basis other than default evaluation reference sets an arbitrary evaluation reference. In this case, for a member having valid default setting, the member record in which the evaluation category is set as "1", the item number n is set as "2", and the classification ID of vegetables and the classification ID of fruits are set as the item IDs, is stored in the member DB 33. For a member having changed the default setting, the member record in which the evaluation category, the item number n, and the item ID are arbitrarily set as described above, is stored in the member DB 33.

The reference ratio is a value that a member arbitrarily sets. The member determines a target value for determining, for example, whether or not shopping of healthy stuff is done, as a reference ratio. The reference ratio will be described in detail in conjunction with an operation of the shopping support system 10 described below. However, a default reference ratio may be determined by an administrator or a manager of the member server 12. In addition, only the member which requires a reference ratio other than the default sets a manual reference ratio.

A value that is recommended by a related organization, such as, authority of nutrition of such as a specialist like a researcher or a research institution, or a responsible government office is stored in an auxiliary memory device 133 as a recommended value.

The support server 13 includes a purchase history DB 34.

The purchase history DB 34 stores a purchase history record of each member. The member server 12 accesses the purchase history DB 34 so as to perform reading or writing of the purchase history record.

The purchase history record includes a member ID, purchase date and time, a store ID, a ratio, a reference ratio, and the like. The purchase date and time is a date and time when a member identified by a corresponding member ID purchased merchandise. The store ID is a unique store ID for specifying a store in which the member purchased the merchandise. The ratio is a ratio C indicating frequency of purchase at the store which is specified by the store ID at the purchase date and time. The ratio C will be described in detail below. The reference ratio is recorded in the member record of the member at the purchase date and time.

The user terminal 20 includes a processor 201, a main memory 202, an auxiliary memory device 203, a touch panel 204, a camera unit 205, a wireless unit 206, and the like. The processor 201, the main memory 202, the auxiliary memory device 203, the touch panel 204, the camera unit 205, and the wireless unit 206 are connected to each other through a system transmission path 207 including an address bus, a data bus, a control signal line, or the like.

The user terminal 20 serves as a computer using the processor 201, the main memory 202, the auxiliary memory device 203, and the system transmission path 207 connecting the processor 201, the main memory 202, and the auxiliary memory device 203 to one another.

The processor 201 corresponds to a main functional unit of the computer. The processor 201 controls the other units according to an operating system or an application program so as to perform various functions of the user terminal 20.

The main memory 202 corresponds to a main storage of the computer. The main memory 202 includes a nonvolatile memory region and a volatile memory region. The main memory 202 stores the operating system or the application program in the nonvolatile memory region. In addition, the main memory 202 can store data that are necessary for the processor 201 to control each unit, in the nonvolatile memory region or the volatile memory region. The main memory 202 uses the volatile memory region as a work area in which data are appropriately rewritten by the processor 201.

The auxiliary memory device 203 corresponds to an auxiliary storage of the computer. The auxiliary memory device 203 is, for example, an electric erasable programmable read-only memory (EEPROM). A hard disc drive (HDD), a solid state drive (SSD), or the like may be used as the auxiliary memory device 203. The auxiliary memory device 203 stores data that are used for the processor 201 to perform various processing, or data that are generated by the processing of the processor 201. The auxiliary memory device 203 can also store the application program.

The touch panel 204 functions as an input device and a display device of the user terminal 20. The touch panel 204 displays an icon which starts up the application program.

The camera unit 205 has a resolution to the extent that a barcode can be detected.

The wireless unit 206 performs data communication with the repeater 16 using wireless communication. For example, an information processing device in which the camera unit 205 and the wireless unit 206 are embedded, among mobile information processing devices such as, a smart phone, a mobile phone, and a tablet terminal, is used as the user terminal 20.

The user terminal 20 having the aforementioned configuration serves as a terminal which can be used by the shopping support system 10 by installing a terminal program P1. The terminal program P1 presents a control sequence that is performed by the processor 201 of the user terminal 20 so that the user terminal 20 is compatible with the shopping support system 10. The terminal program P1 is stored in the auxiliary memory device 203.

The POS terminal 14 includes a processor 141, a main memory 142, an auxiliary memory device 143, a communication I/F 144, an input and output I/F 145, and the like. The processor 141, the main memory 142, the auxiliary memory device 143, the communication I/F 144, and the input and output I/F 145 are connected to each other through a system transmission path 146 including an address bus, a data bus, a control signal line, or the like.

The POS terminal 14 serves as a computer using the processor 141, the main memory 142, the auxiliary memory device 143, and the system transmission path 146 connecting the processor 141, the main memory 142, and the auxiliary memory device 143 to one another.

The processor 141 corresponds to a main functional unit of the computer. The processor 141 controls the other unit according to an operating system or an application program, so as to perform various functions of the POS terminal 14.

The main memory 142 corresponds to a main storage of the computer. The main memory 142 includes a nonvolatile memory region and a volatile memory region. The main memory 142 stores the operating system or the application program in the nonvolatile memory region. In addition, the main memory 142 can store data that are necessary for the processor 141 to control each unit, in the nonvolatile memory region or the volatile memory region. The main memory 142 uses the volatile memory region as a work area in which data are appropriately rewritten by the processor 141.

The auxiliary memory device 143 corresponds to an auxiliary storage of the computer. The auxiliary memory device 143 is, for example, an EEPROM, an HDD, an SSD or the like. The auxiliary memory device 143 stores data that are used for the processor 141 to perform various processing, or data that are generated by the processing of the processor 141. The auxiliary memory device 143 can also store the application program.

The communication I/F 144 is an interface of data communication which is performed between the respective servers 11, 12, and 13 and the like which are connected through the LAN 17.

The input and output I/F 145 is a data communication interface which is performed between various input and output devices. Generally, a scanner, a keyboard, a display for an operator, a display for a customer, a printer for receipt printing, or the like is connected to the input and output I/F 145.

The POS terminal 14 stores a POSID in the auxiliary memory device 143. The POS terminal 14 may store the POSID in the main memory 142. The POSID is unique to the POS terminal 14. If the shopping support system 10 includes multiple POS terminals 14, there are no identical POSIDs. The respective servers 11, 12, and 13 identify the POS terminal 14 using the POSID.

The POS terminal 14 has a barcode indicating its own POSID. For example, in a case of the POS terminal 14 of a face-to-face type or a semi-self type, a barcode is presented on a shopper side. In a case of a POS terminal of a self-type, the barcode is presented on a front surface side of the POS terminal 14. A position of the aforementioned barcode is an example. If a shopper can perform reading using the camera unit 205 of the user terminal 20, the position of the barcode is not limited in particular. In addition, a two-dimensional data code may be used instead of the barcode.

The support server 13 includes a processor 131, a main memory 132, an auxiliary memory device 133, a communication I/F 134, and the like. The processor 131, the main memory 132, the auxiliary memory device 133, and the communication I/F 134 are connected to each other through a system transmission path 135 including an address bus, a data bus, a control signal line, or the like.

The support server 13 serves as a computer using the processor 131, the main memory 132, the auxiliary memory device 133, and the system transmission path 135 connecting the processor 131, the main memory 132, and the auxiliary memory device 133 to each other.

The processor 131 corresponds to a main functional unit of the computer. The processor 131 controls the other units according to an operating system or an application program, so as to perform various functions of the support server 13.

The main memory 132 corresponds to a main storage of the computer. The main memory 132 includes a nonvolatile memory region and a volatile memory region. The main memory 132 stores the operating system or the application program in the nonvolatile memory region. In addition, the main memory 132 can store data that are necessary for the processor 131 to control each unit, in the nonvolatile memory region or the volatile memory region. The main memory 132 uses the volatile memory region as a work area in which data are appropriately rewritten by the processor 131.

The auxiliary memory device 133 corresponds to an auxiliary storage of the computer. The auxiliary memory device 133 is, for example, an EEPROM, an HDD, an SSD or the like. The auxiliary memory device 133 stores data that are used for the processor 131 to perform various processing, or data that are generated by the processing of the processor 131. The auxiliary memory device 133 can also store the application program.

The communication I/F 134 is a data communication interface which is performed between other servers 11 and 12, the POS terminal 14, the information terminal 15 or the repeater 16 which are connected through the LAN 17.

The support server 13 having the configuration stores a server program P2 in the auxiliary memory device 133. In addition, the support server 13 has a transaction file region W1 in the auxiliary memory device 133. In addition, the support server 13 stores the purchase history DB 34 in the auxiliary memory device 133.

The server program P2 is a program that constantly resides in the support server 13, and is regularly executed by a processor 131 when the support server 13 is in a normal operation state. The server program P2 displays a processing sequence of the processor 131 for providing the shopping support, in cooperation with the user terminal 20 which operates based on the terminal program P1.

The transaction file region W1 stores a transaction file. The transaction file is generated for each shopper. The support server 13 can simultaneously store multiple transaction files in the transaction file region W1.

Data of each transaction file includes member information, a purchased merchandise list, and evaluation data. Details of the data will be described in conjunction with an operation of the shopping support system 10.

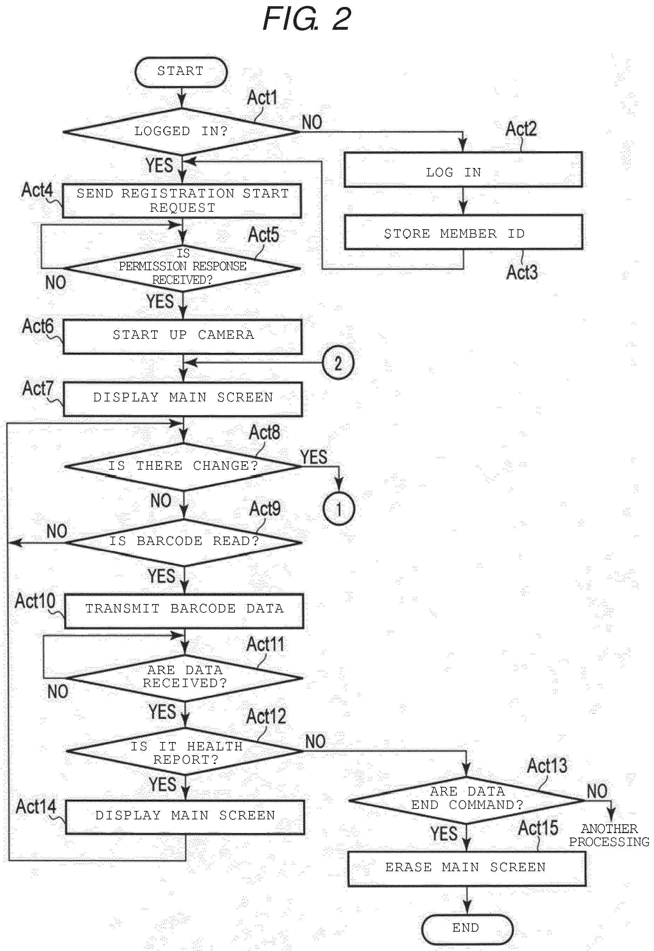

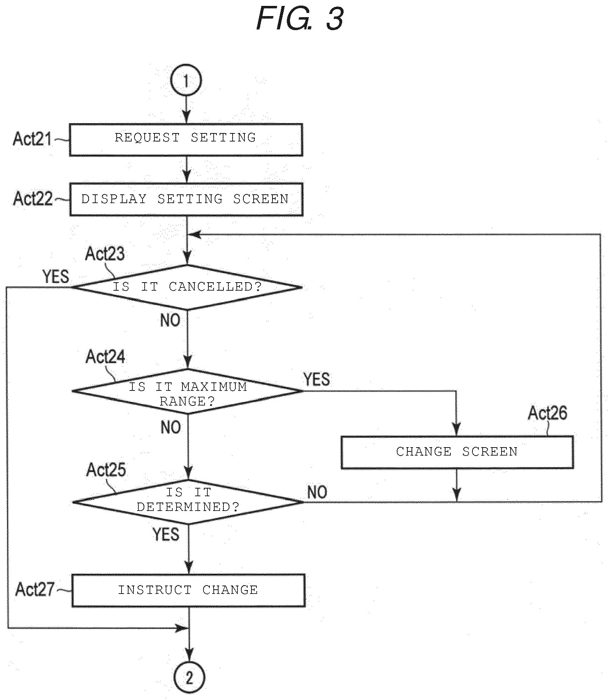

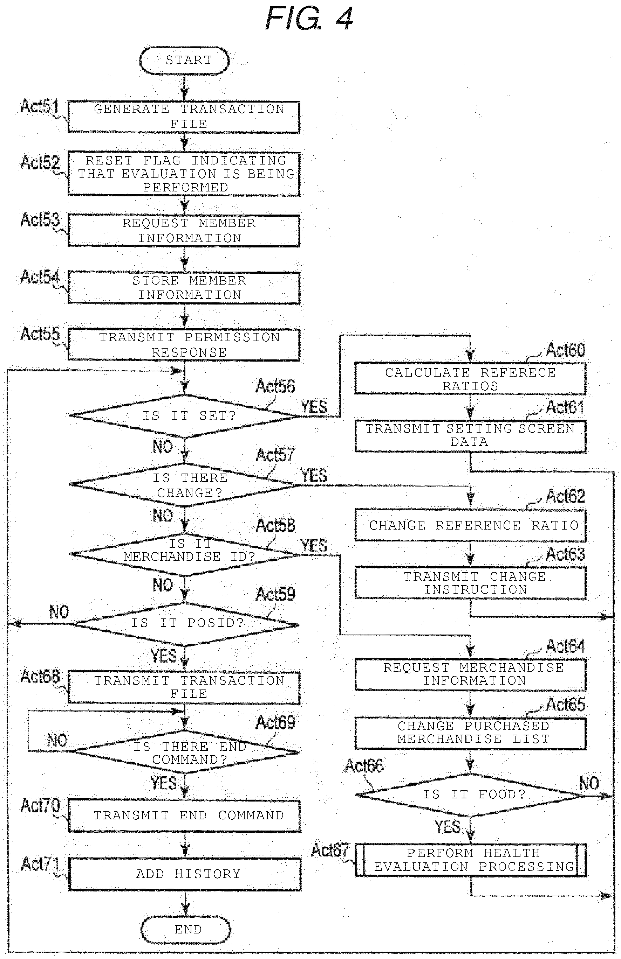

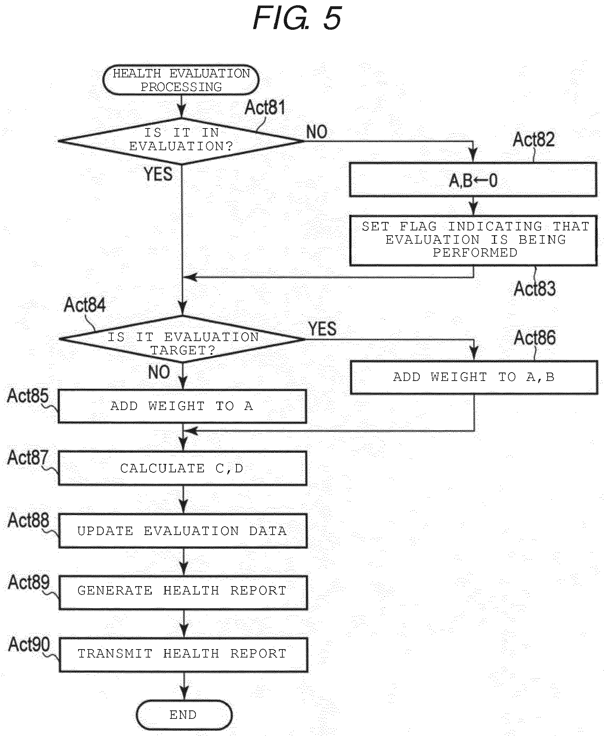

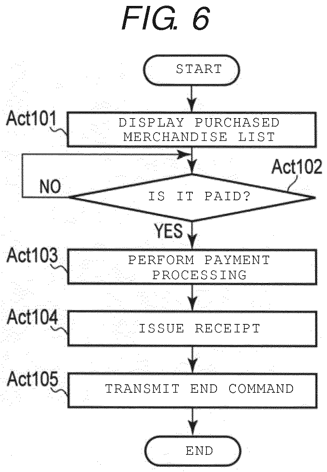

Next, the operation of the shopping support system 10 will be described with reference to FIG. 2 to FIG. 7. FIG. 2 and FIG. 3 are flowcharts illustrating a main sequence of information processing that the processor 201 of the user terminal 20 performs according to the terminal program P1. FIG. 4 and FIG. 5 are flowcharts illustrating a main sequence of information processing that the processor 131 of the support server 13 performs according to the server program P2. FIG. 6 is a flowchart illustrating a main sequence of information processing that a processor 141 of a POS terminal 14 performs according to a control program.

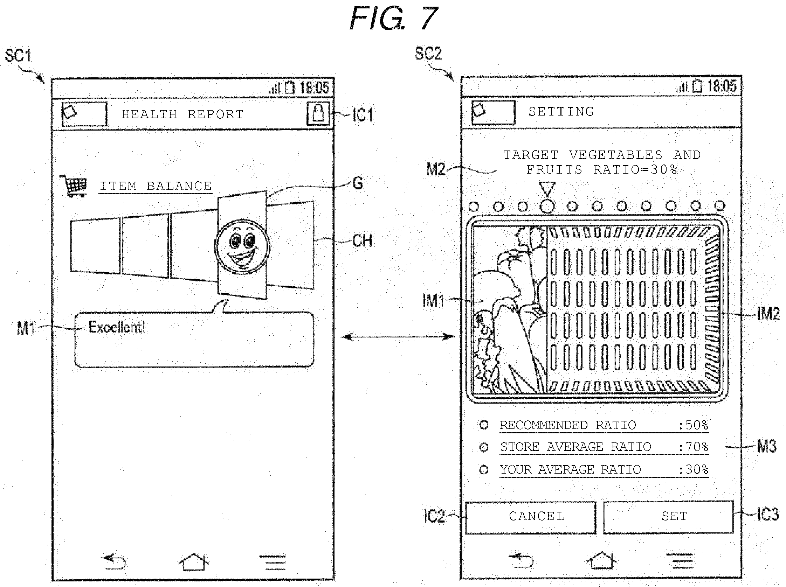

FIG. 7 illustrates a screen transition of screens which are displayed on a touch panel 204 of the user terminal 20.

The processing described below with reference to FIG. 2 to FIG. 6 is an example, and various kinds of appropriate processing that can lead to the same result can be carried out. In addition, content or the like of the screens illustrated in FIG. 7 is an example, and layout or the like thereof can be appropriately changed.

Before starting shopping in a store, a shopper instructs startup of the terminal program P1 by operating the touch panel 204 of the user terminal 20. That is, the shopper touches an icon in a screen is displayed on the touch panel 204. After the instruction is received, the processor 201 starts the processing illustrated in the flowchart of FIG. 12.

First, the processor 201 determines whether or not the support server 13 is in a log-in state (Act1). If the support server 13 is not in the log-in state (NO in Act1), the processor 201 displays a log-in screen on the touch panel 204, and receives a log-in command (Act2). The shopper can log-in by inputting the shopper's member ID on the log-in screen. The shopper may input a password together with the member ID.

If the log-in command is generated, the processor 201 controls the wireless unit 206 such that log-in information including the member ID is transmitted to the support server 13. By this control, the log-in information is wirelessly transmitted from the wireless unit 206 to the support server 13.

The support server 13 performs log-in authentication. In addition, the support server 13 notifies the user terminal 20 of the authentication result thereof.

If the log-in is approved, the processor 201 stores the member ID in the log-in information in the auxiliary memory device 203 (Act3). The member ID may be stored in the main memory 202 instead of the auxiliary memory device 203.

Meanwhile, if the support server 13 is in the log-in state (YES in Act1), the processor 201 does not perform the aforementioned processing of Act2 and Act3. If the support server 13 is in the log-in state, the member ID is stored in the main memory 202 or the auxiliary memory device 203.

If the log-in is approved in Act2 or the support server 13 is already in the log-in state, the processor 201 controls the wireless unit 206 such that a registration start request command is transmitted to the support server 13 (Act4). By this control, the registration start request command is wirelessly transmitted from the wireless unit 206 to the support server 13. The registration start request command includes the member ID included in the log-in information.

The processor 131 of the support server 13 waits for the registration start request command. If the registration start request command is received, the processor 131 starts information processing of the sequence illustrated in the flowcharts in FIG. 4 and FIG. 5.

First, the processor 131 generates a transaction file in the transaction file region W1 of the auxiliary memory device 133 (Act51). At this time, the processor 131 does not store the member information, the purchased merchandise list, and the evaluation data, in the transaction file 40.

The processor 131 resets an evaluation flag as "0" (Act52). The evaluation flag is used to determine whether or not health evaluation processing which will be described below is performed, and is data of one bit which is stored in the volatile region of the main memory 132.

The processor 131 controls the communication I/F 134 to send a request for member information to the member server 12 (Act53). By this control, a member information request command is transmitted to the member server 12 from the communication I/F 134 through the LAN 17. The member information request command includes a member ID included in the registration start request command.

The member information request command is received by the member server 12. The member server 12 accesses the member DB 33, and reads the member record corresponding to the member ID included in the member information request command. Then, the member server 12 transmits the member record to the support server 13 that sent the member information request command.

The processor 131 of the support server 13 that transmitted the member information request command waits for the member record. In addition, if the member record is received through the communication I/F 134, the processor 131 stores information set in the member record in the transaction file which is generated in Act51 (Act54). By this processing, member information, such as, personal data, evaluation category, the number of items n, item IDs of the number of items n, the reference ratio, or the like is stored in the transaction file.

The processor 131 controls the communication I/F 134 such that permission response is transmitted to the user terminal 20 (Act55). By this control, a permission response signal is transmitted to the user terminal 20 from the communication I/F 134.

The processor 201 of the user terminal 20 which has transmitted the registration start request command waits for the permission response (Act5 in FIG. 2). If the permission response is received from the support server 13 through the wireless unit 206 (YES in Act5), the processor 201 starts up the camera unit 205 (Act6). In addition, the processor 201 sets a screen of the touch panel 204 as, for example, a main screen SC1 illustrated in FIG. 7 (Act7).

As illustrated, a message M1, a chart CH, a guide G, and an icon IC1 are displayed on the main screen SC1. The icon IC1 is touched by the shopper to change the reference ratio stored in the member record. Details of the message M1, the chart CH, and the guide G will be described below.

The processor 201 which caused the start screen SC1 to be displayed determines whether or not the icon IC1 is touched (Act8). If the icon IC1 is not touched (NO in Act8), the processor 201 determines whether or not the barcode is read through the camera unit 205 (Act9). If the barcode is not read (NO in Act9), the processor 201 determines again whether or not the icon IC1 is touched (Act8). Here, the processor 201 waits for touching of the icon IC1 or reading of the barcode by processing of Act8 and Act9.

When the reference ratio is changed, the shopper touches the icon IC1. If touching of the icon IC1 is sensed by a signal from the touch panel 204 (YES in Act8), the processor 201 controls the wireless unit 206 such that a setting request command is transmitted to the support server 13 (Act21 in FIG. 3). By this control, the setting request command is transmitted to the support server 13 from the wireless unit 206. The member ID is included in the setting request command.

The processor 131 of the support server 13 which instructed transmission of the permission response determines whether or not the setting request command is received (Act56 in FIG. 4). If the setting request command is not received (NO in Act56), the processor 131 determines whether or not a change instruction command is received (Act57). If the change instruction command is not received (NO in Act57), the processor 131 determines whether or not the merchandise ID is received (Act58). If the merchandise ID is not received (NO in Act58), the processor 131 determines whether or not the POSID is received (Act59). If the POSID is not received (NO in Act59), the processor 131 determines again whether or not the setting request command is received (Act56). Here, the processor 131 waits for receiving of the setting request command, the change instruction command, the merchandise ID, or the POSID during the processing of Act56 to Act59.

If the setting request command is received (YES in Act56), the processor 131 calculates a value which is used as a reference for determining the reference ratio (Act60). Specifically, the processor 131 extracts the purchase history record for the entire period or a predetermined period, which includes the member ID that is included in the setting request command, from the purchase history DB 34. Then, the processor 131 calculates an arithmetic average with respect to the reference ratios included in the extracted purchase history records. Here, the calculated value is used as a personal average value. Furthermore, the processor 131 acquires the store ID included in the newest purchase history record that are extracted. Then, the processor 131 extracts the purchase history record for the entire period or a predetermined period, which includes the store ID, from the purchase history DB 34. Then, the processor 131 calculates an arithmetic average with respect to the reference ratios included in the extracted purchase history records. Here, the calculated value is used as a store average value.

The processor 131 controls the communication I/F 134 such that setting screen data are transmitted to the user terminal 20 that transmitted the setting request command (Act61). By this control, the setting screen data are transmitted from the communication I/F 134 to the user terminal 20. The setting screen data include two average values calculated in Act59, the recommend value of the reference ratio stored in the auxiliary memory device 133, and the reference ratio shown in the member information included in the transaction file created in Act51 at this point of time. In this manner, the processor 131 serves as a display control unit by the processing of Act60 and Act61.

The processor 201 of the user terminal 20 that transmitted the setting request command waits for the setting screen data. After receiving the setting screen data through the wireless unit 206, the processor 201 switches a screen of the touch panel 204 from the main screen SC1 to, for example, a setting screen SC2 illustrated in FIG. 7 (Act22 in FIG. 3). That is, the processor 201 generates the setting screen SC2, based on the received setting screen data, and controls the touch panel 204 such that the setting screen is displayed.

As illustrated, a message M2, an image IM1, an image IM2, a message M3, an icon IC2, and an icon IC3 are displayed on the setting screen SC2. The message M2 shows the current reference ratio as a numeral value. The image IM1 shows the reference ratio in a graph form, as a display range is changed according to the reference ratio. For example, if the reference ratio is 30%, the image IM1 is obtained by cutting only 30% of a prepared image from the left thereof, or by reducing a width of the prepared image by 30%. The image IM2 is displayed as a background of the image IM1, and indicates a range that the image IM1 indicates, if the reference ratio is a maximum (100%) (hereinafter, referred to as maximum range). In FIG. 7, an image showing a state where a shopping basket is viewed from right above is used as the image IM2, and a range of an inner side of the shopping basket is a maximum range.

It is preferable that the image IM1 is an image that a shopper can image merchandise based on which evaluation is carried out. In FIG. 7, the image IM1 shows vegetables and fruits. That is, the image IM1 illustrated in FIG. 7 is an example which is suitable for a case where the evaluation is carried out based on a ratio of vegetables and fruits with respect to all foods to be purchased. The image IM1 is not limited to a bar graph, and may also be a circle graph. If the image IM1 is a circle graph, an image of a circular shape such as an image of dish can be used also as the image IM2. The image IM1 and the image IM2 are not limited to the aforementioned images, and an image that a shopper can imagine shopping, food, nutrition, or the like may be used therefor.

The message M3 indicates a value that a shopper uses as a reference to determine the reference ratio. In FIG. 7, a recommended value, a store average value, and a personal average value are displayed. A central value, a mode or the like of a store or a person may be used, instead of a store or a personal average value. In this case, the processor 131 calculates the value from the extracted record based on the store ID or the member ID in Act60 in FIG. 4, and adds the value to setting data.

The icon IC2 is touched by a shopper, when the screen is returned from the setting screen SC2 to the main screen SC1. The icon IC3 is touched by the shopper, if a change of the reference ratio is completed.

The processor 201 which displays the setting screen SC2 determines whether or not the icon IC2 is touched (Act23). If the icon IC2 is not touched (NO in Act23), the processor 201 determines whether or not the maximum range is touched (Act24). If the maximum range is not touched (NO in Act24), the processor 201 determines whether or not the icon IC3 is touched (Act25). If the icon IC3 is not touched (NO in Act25), the processor 201 determines again whether or not the icon IC2 is touched (Act23). Here, the processor 201 waits for touching of the icon IC2, the maximum range, or the icon IC3 during the processing of Act23 to Act25.

To cancel the change of the reference ratio, the shopper touches the icon IC2. If touching of the icon IC2 is sensed by a signal from the touch panel 204 (YES in Act23), the process returns to Act7 in FIG. 2. That is, the processor 131 returns the screen of 204 to the main screen SC1.

To change the reference ratio, the shopper first touches the maximum range.

If touching of the maximum range is sensed by the signal from the touch panel 204 (YES in Act24), the processor 201 changes the image IM1 to an image in which a touched position is on the right (Act26). Furthermore, the message M2 is changed to a message according to the touched position. For example, if a position of 50% of a width from the left to the right from a left end of the maximum range is touched, the processor 201 changes the image IM1 such that the maximum range is set to a range indicating a range of 50% from a left end of the maximum range, and a value that the message M2 indicates is set as 50%. The shopper watches a display range of the image IM1 and a value of the message M2, and touches a maximum display range such that the reference ratio becomes a desired value. Thereafter, the processor 201 returns to a state of waiting in Act23 to Act25.

The shopper touches the icon IC3 after watching the display range of the image IM1 and the value of the message M2 and confirming that the reference ratio became a desired value.

If touching of the icon IC3 is sensed by the signal from the touch panel 204 (YES in Act25), the processor 201 controls the wireless unit 206 such that the change instruction command is transmitted to the support server 13 (Act27). By this control, the change instruction command is wirelessly transmitted to the support server 13 from the wireless unit 206. The change instruction command includes the member ID, and a value which is displayed in the message M2 at this time as an updated reference ratio. Then, the process returns to Act7 in FIG. 2 thereafter. That is, after the screen of the touch panel 204 returns to the main screen SC1, the processor 201 repeats subsequent processing.

If the shipper touches the icon IC2 without touching the icon IC3 even after the shopper touches the maximum range, the process returns to Act7 in FIG. 2 without executing Act27. Hence, the reference ratio is not changed.

If the change instruction command is received in a state of waiting in Act56 to Act59 in FIG. 4 (YES in Act57), the processor 131 changes the reference ratio (Act62). That is, the processor 131 changes the reference ratio which is shown in the member information of the transaction file corresponding to the member ID included in the change instruction command, into a reference ratio included in the change instruction command. Furthermore, the processor 131 controls the communication I/F 134 such that the received change instruction command is transmitted to the member server 12 (Act63). By this control, the change instruction command is transmitted to the member server 12 from the communication I/F 134. After this, the processor 131 returns to a state of waiting in Act56 to Act59. In this manner, the processor 131 serves as a setting unit that sets the reference ratio in response to the instruction of the shopper by the processing of Act57, Act62, and Act63.

If the change instruction command is received as described above, the member server 12 changes the reference ratio which is displayed in the member record of the member ID included in the change instruction command into a reference ratio included in the change instruction command.

The various processing described so far is performed according to operation of the shopper. However, the processing does not need to be performed during shopping at a store. That is, if the shopper goes to the store for shopping, the shopper picks up merchandise that the shipper wants to buy, that is, in a cart or the like after a barcode of the merchandise to be purchased is captured by the camera unit 205.

If the barcode is detected from an image captured by the camera unit 205 (YES in Act9) in a state of waiting in Act8 or Act9 in FIG. 2, the processor 201 transmits data of the barcode (Act10). That is, the processor 201 controls the wireless unit 206 such that the barcode data are transmitted to the support server 13. By this control, the barcode data is wirelessly transmitted to the support server 13 from the wireless unit 206. The barcode data include the member ID.

If the barcode data received from the user terminal 20 is the merchandise ID (YES in Act58) in a state of waiting in Act56 to Act59 in FIG. 4, the processor 131 requests the merchandise information (Act64). That is, the processor 131 controls the communication I/F 134 such that merchandise information is requested to the POS server 11. By this control, a merchandise information request command transmitted from the communication I/F 134 to the POS server 11. The merchandise information request command includes the merchandise ID obtained from the barcode.

If the merchandise information request command is received, the POS server 11 accesses the merchandise DB 31, and reads merchandise record corresponding to the merchandise ID included in the merchandise information request command. Then, the POS server 11 transmits the merchandise record to the support server 13 that transmitted the merchandise information request command.

The processor 131 of the support server 13 that transmitted the merchandise information request command waits for the merchandise record. If the merchandise record is received through the communication I/F 134, the processor 131 updates a purchased merchandise list of the transaction file generated in Act51 (Act65). Specifically, the processor 131 generates purchased merchandise data by adding the number of merchandise and price to the merchandise ID of the merchandise record, the classification ID, the merchandise name, and the unit price. At this point of time, the number of merchandise is "1". The price is obtained by multiplying a unit price by the number of merchandise. The processor 131 adds the selling merchandise data to the selling merchandise list. However, if the purchased merchandise data previously having the same merchandise ID exists in the purchased merchandise list, the number of merchandise and the price of the present data are added to the existing purchased merchandise data, and the purchased merchandise data are not added.

In this manner, the processor 131 serves as a specifying unit which specifies merchandise to be purchased by a shopper during the processing of Act58, Act64, and Act65.

After the purchased merchandise list is updated, the processor 131 determines whether or not purchased merchandise is food from the classification ID of the purchased merchandise data (Act66). If the purchased merchandise is food (YES in Act66), the processor 131 performs health evaluation processing (Act67). If the purchased merchandise is not food (NO in Act66), the processor 131 returns to a state of waiting in Act56 to Act59 without performing the health evaluation processing.

If the health evaluation processing starts, the processor 131 determines whether or not an evaluation flag is first set as "1" (Act81 in FIG. 5). If the evaluation flag is reset as "0" (NO in Act81), the processor 131 initializes both a first work area and a second work area which are set in the main memory 132 as "0" (Act82). In the following description, values of the first and second work areas are respectively referred to as A and B. In addition, the processor 131 sets the evaluation flag as "1" (Act83).

If the evaluation flag is set as "1" (YES in Act81), the processor 131 does not perform the processing of Act82 and Act83. If the processing of Act82 and Act83 end or flag indicating that evaluation is being performed is set, the processor 131 determines whether or not the purchased merchandise data are merchandise data corresponding to an evaluation target (Act84). That is, the processor 131 searches for the member information included at this point of time in the transaction file that was generated in Act51, and determines whether or not the merchandise ID of the purchased merchandise data is evaluation target merchandise specified by the item ID of the member information. If the item ID is the merchandise ID, the evaluation target merchandise is merchandise identified by the merchandise ID. If the item ID is a classification code, the evaluation target merchandise is involved in a category specified by the classification code. In this manner, the processor 131 serves as a determination unit which determines whether or not merchandise to be purchased is merchandise of an evaluation target during the processing of Act84.

If the purchased merchandise data are not merchandise data corresponding to the evaluation target (NO in Act84), the processor 131 adds a weight of the purchased merchandise data only to the value A of the first work area (Act85). In contrast, if the purchased merchandise data are merchandise data corresponding to the evaluation target (YES in Act84), the processor 131 adds the weight of the purchased merchandise data to the value A of the first work area and the value B of the second work area (Act86).

If the processing of Act85 or Act86 ends, the processor 131 calculates the ratio C and an evaluation value D by using Equation (1) and Equation (2) (Act87). E of Equation (2) is a reference ratio which is shown in the member information included at this point of time in the transaction file that was generated in Act51.

$$C = (B / A) \times 100 \quad \dots (1)$$

$$D = (C / E) \times 100 \quad \dots (2)$$

As shown in Equation (1), the ratio C is a ratio of a total weight of the evaluation target merchandise to a total weight of the merchandise to be purchased. In addition, as shown in Equation (2), the evaluation value D is a ratio of the ratio C to the reference ratio E. The higher the ratio C is, the larger the weight of the evaluation target merchandise included in the selling merchandise is. In addition, the further the evaluation value D approaches 100%, the further the ratio C approaches the reference ratio E.

In this manner, the processor 131 serves as a calculation unit which calculates a ratio of a ratio of merchandise that is determined to be an evaluation target to merchandise to be purchased, with respect to a predetermined reference ratio, in the processing of Act85 to Act87.

The processor 131 updates the evaluation data included in the transaction file which was generated in Act51 (Act88). Specifically, the processor 131 records the calculated ratio C and the evaluation value D in the evaluation data. If the ratio C and the evaluation value D are previously recorded in the evaluation data, those are overwritten.

The processor 131 generates image data of a health report based on the transaction file (Act89). Then, the processor 131 controls the communication I/F 134 such that the health report is transmitted to the user terminal 20 that transmitted the barcode data (Act90). By this control, the image data of the health report is transmitted to the user terminal 20 that transmitted the barcode data, from the communication I/F 134. Thereafter, the processor 131 ends health evaluation processing. If the health evaluation processing ends, the processor 131 returns to the state of waiting in Act56 to Act59 in FIG. 4.

The processor 201 of the user terminal 20 that transmitted the barcode data waits for data from the support server 13 (Act11 in FIG. 2). If corresponding data are received (YES in Act11) the processor 201 determines whether or not the data are image data of a health report (Act12). If the data are not the image data of the health report (NO in Act12), the processor 201 determines whether or not the data are an end command, which will be described below (Act13). If the data are not the end command (NO in Act13), the processor 201 performs processing according to the received data.

If the received data are the image data of the health report (YES in Act12), the processor 201 switches the screen of the touch panel 204 to the main screen SC1 based on the image data of the health report (Act14). Then, the processor 201 returns to the state of waiting in Act8 and Act9.

The main screen SC1 based on the image data of the health report will be described with reference to FIG. 7. Particularly, the message M1, the chart CH, and the guide G will be described. In the chart CH, a left end toward the main screen SC1 is set as the evaluation value D = 0% in a scale, and a right end is set as the evaluation value D = 100% in the scale. In addition, the guide G is displayed on a point indicating the evaluation value D at a current point of time. In addition, an image according to the evaluation value D is displayed in the guide G. In FIG. 7, an image of a face is displayed as an example. In addition, the smaller the evaluation value D is, the worse facial expression is shown in the face (for example, crying face), and the larger the evaluation value D is, the better facial expression is shown in the face (for example, smile face). The message M1 displays evaluation according to the evaluation value D in a character string. That is, the character string which shows the better evaluation as the evaluation value D is, the larger is displayed in the message M1. In FIG. 7, the message M1 displays the character string of "Excellent!" as an example. If the evaluation value D exceeds 100%, the guide G and the message M1 are displayed in the same manner as in the case where the evaluation value D is 100%. In this manner, the processor 131 serves as a notification unit which notifies a shopper of a ratio between the ratio of merchandise determined to be an evaluation and the merchandise to be purchased, and a predetermined reference ratio in the processing of Act90. Since the processor 131 is not able to calculate the evaluation value D in a state where data of selling merchandise are not registered, the evaluation value D is regarded as D = 0% in this case, and thus, the main screen SC1 is displayed.

The shopper can see the ratio of the ratio C of a total weight of evaluation target merchandise to a total weight of merchandise to be purchased, with respect to the reference ratio, that is, how close the ratio C is to a target value, based on the evaluation value D denoted in the chart CH of the main screen SC1. If the evaluation value D is less than 100%, the shopper can recognize that a purchase ratio of healthy food is low. In addition, thereby, the shopper can be urged to add food which is the evaluation target merchandise to merchandise to be purchased such that the evaluation value D increases, and shopping with a high ratio of evaluation target merchandise, that is, good shopping with healthy balance can be supported.

If the shopper selects merchandise to be purchased, the camera unit 205 reads a barcode (POSID) which is displayed on the POS terminal 14 to perform payment for the merchandise. At this time, the processor 201 of the user terminal 20 recognizes that the barcode is read in Act9 in FIG. 2. Then, the processor 201 controls the wireless unit 206 such that the member ID and barcode data are transmitted to the support server 13.

If the processor recognizes that the barcode data received from the user terminal 20 is POSID (YES in Act59 in FIG. 4), the processor 131 of the support server 13 transmits the transaction file (Act68). That is, the processor 131 controls the communication I/F 134 such that the transaction file which is specified by the member ID is transmitted to the POS terminal 14 which is specified by the POSID. By this control, the transaction file specified by the member ID is transmitted from the communication I/F 134 to the POS terminal 14 specified by POSID.

If the transaction file transmitted from the support server 13 is received as described above, the processor 141 of the POS terminal 14 start information processing of a sequence illustrated in the flowchart in FIG. 6.

First, the processor 141 displays a purchased merchandise list which is included in the received transaction file (Act101). Then, the processor 141 waits for input of payment data of price (Act102). If the payment data are input through an input device such as a keyboard (YES in Act102), the processor 141 performs payment processing (Act103). Then, if the payment processing is normally completed, the processor 141 controls issue of a receipt (Act104). Then, the processor 141 controls the communication I/F 144 such that an end command is transmitted to the support server 13 (Act105). By this control, the end command is transmitted from the communication I/F 144 to the support server 13. The end command includes purchase date and time when the payment processing is performed. If transmission of the end command is completed, the processor 141 ends the information processing.

The processor 131 of the support server 13 which ends transmitting of the transaction file waits for the end command (Act69 in FIG. 4). If the end command is received from the POS terminal 14 through the communication I/F 134 (YES in Act69), the processor 131 controls the communication I/F 134 such that the end command is transmitted to the user terminal 20 that transmitted the barcode data (Act70). By this control, the end command is transmitted from the communication I/F 134 to the user terminal 20.

If the end command is received (YES in Act13 in FIG. 2), the processor 201 of the user terminal 20 erases the main screen SC1 (Act15) Then, the processor 201 ends the information processing illustrated in FIG. 2.

The processor 131 of the support server 13 which ends transmission of the end command in Act69 in FIG. 4 adds the purchase history record to the purchase history DB 34, based on the purchase date and time which is included in the transaction file 40 and the end command (Act71). Then, the processor 131 ends the information processing illustrated in FIG. 4.

Embodiments are not limited to the above embodiment.

For example, in the above embodiment, the ratio C is obtained from a weight of merchandise, but may be obtained using another method. For example, the ratio C may be obtained from the number of all purchased merchandise and the number of evaluation target merchandise. In addition, the ratio C can also be obtained from amount for all purchased merchandise and amount for the evaluation target merchandise.

In addition, in the above embodiment, notification is made by displaying the evaluation value D on a display device of the user terminal 20 in a form of the chart CH, but a notifying method of the evaluation value D is not limited thereto. For example, the evaluation value D may be displayed on the display device of the user terminal 20 as it is, or notification of the evaluation value D may be made by a voice using a speaker function of the user terminal 20. Alternatively, notification of the evaluation value D may be made by a graph which is used on the setting screen SC2. That is, an image of which display range is changed according to the evaluation value D is displayed in an image which indicates a maximum value (100%) of the evaluation value D.

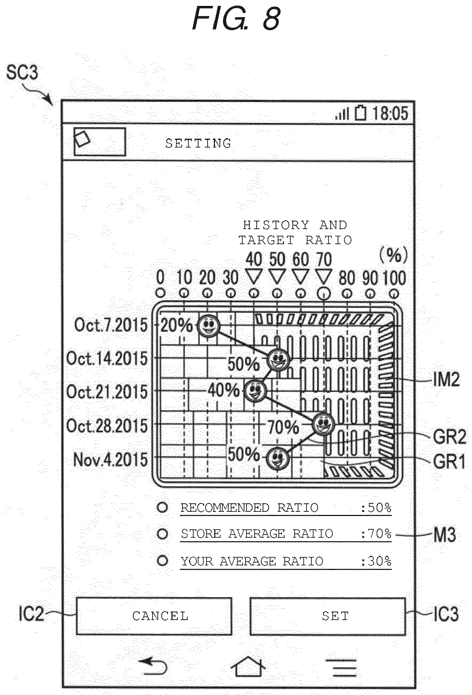

In addition, instead of the setting screen SC2, a setting screen SC3 illustrated in FIG. 8 may be displayed. As illustrated, the setting screen SC3 includes the image IM2, the message M3, the icon IC2, the icon IC3, a bar graph GR1, and a line graph GR2. Description on elements to which the same symbols or reference numerals as in the setting screen SC2 are assigned will be omitted. The bar graph GR1 is displayed in the image IM2, and a previous reference ratio and a current reference ratio are displayed, so that a change of the reference ratio is shown. Each bar of the bar graph GR1 denotes values of each reference ratio by a display range from a left end in the same manner as in the image IM1 on the setting screen SC2. The line graph GR2 is displayed to overlap the bar graph GR1 on the bar graph, and a previous ratio C and a current ratio C are displayed to shoe change of the ratio C. An image of a face according to the evaluation value D is displayed on each point of the line graph GR2 in the same manner as the guide G in FIG. 7. The evaluation value D is calculated by a ratio and a reference ratio. Alternatively, the evaluation value D may also be stored in the purchase history. In addition, a value of the ratio C is displayed in a state of being added to each point of the line graph GR2. In FIG. 8, a vertical axis denotes time, first to fourth values from the top of the screen indicated by the bar graph GR1 and the line graph GR2 are the previous reference ratios and ratios C, and values at the bottom are a current reference ratio and ratio C. The previous reference ratio and ratio C may display a value for each piece of merchandise of the first time, or may display an average value for each predetermined period. The previous ratio C and reference ratio of the setting screen SC3 are displayed based on the purchase history DB 34, and the current ratio C and reference ratio are displayed based on the transaction file. In addition, if a maximum range in which the image IM2 is denoted is touched, the processor 201 changes a display range of a bar denoting the current reference ratio among the bar graph GR1 in the same manner as in the setting screen SC2. Thereby, the reference ratio can be changed in the same manner as the setting screen SC2. Content of the screen illustrated in FIG. 8 is an example, and layout or the like can be changed appropriately. In addition, instead of the ratio C, the evaluation value D may be displayed by a line graph.

A device such as the support server 13 is generally on a market in a state where a program such as the server program P2 is stored in a ROM. However, it is not limited to this, and a program which is on a market separately from a computer device may be written to a writable storage device included in the computer device in accordance with operation of a user or the like. The program can be distributed by being recorded in a removable recording medium or communicated through a network. The recording medium is not limited to a form thereof, as long as the recording medium can store a program like a CD-ROM or a memory card, and the device is readable. In addition, a function which is obtained by installing or downloading a program may be achieved in cooperation with an operating program (OS) or the like in an inside of the device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

**Claims**

1. A method for carrying out product registration comprising:

   responsive to a first command to start product registration, which is wirelessly transmitted from a user computing device along with a customer ID, generating a transaction file associated with the customer ID in a local data storage of the product registration server, and retrieving a customer record associated with the customer ID from a first data storage region, the customer record including a reference ratio therein;
   responsive to a second command including a product ID, which is wirelessly transmitted from the user computing device along with the customer ID after the first command, retrieving a product record associated with the product ID from a second data storage region, the product ID including a category ID of the product and an attribute value of the product therein, and registering the product ID in the transaction file;
   calculating a first ratio of (A) a sum of attribute values corresponding to registered product IDs associated with one or more category IDs representing particular food categories to (B) a sum of attribute values corresponding to registered product IDs associated with category IDs representing all food categories, and adding the calculated first ratio to the transaction file;
   calculating a second ratio of (C) the first ratio to (D) the reference ratio, and adding the calculated second ratio to the transaction file; and
   generating image data of a graphical user interface (GUI) indicating nutrition balance of registered products at least based on the second ratio in the transaction file, and transmitting the generated image data to the user computing device.

2. The method according to claim 1, wherein the attribute value represents the number of calories in the corresponding product.

3. The method according to claim 1 or 2, wherein the method further comprises:

   responsive to a setting command, which is wirelessly transmitted from the user computing device along with the customer ID, generating image data of a second GUI that indicates the reference ratio and includes one or more selectable objects to designate a new reference ratio, and transmitting the image data of the second GUI to the user computing device.

4. The method according to claim 3, wherein the method further comprises:

   responsive to a user selection of a selectable object in the second GUI, updating the reference ratio included in the customer record to the new reference ratio corresponding to the selectable object.

5. The method according to any one of claims 1 to 4, wherein the method further comprises:

   responsive to a third command to close the product registration, which is wirelessly transmitted from the user computing device along with a point-of-sale (POS) terminal ID, transmitting data in the transaction file to a POS identified by the POS terminal ID, and registering the first ratio and a date when the transaction file was generated in a transaction history record associated with the customer ID.

6. The method according to claim 5, wherein the method further comprises:

   responsive to a setting command, which is wirelessly transmitted from the user computing device along with the customer ID, retrieving the registered first ratio and the date from the transaction history record, and generating image data of a third GUI that indicates the registered first ratio and the date.

7. A non-transitory computer readable medium comprising a program that is executable in a product registration server to cause the product registration server to perform the method for carrying out product registration according to any one of claims 1 to 6.

8. A computer program product storing executable code for the method for carrying out product registration according to any one of claims 1 to 6.

9. A self-registration system comprising:

   a product registration server;
   a user computing device in communication with the product registration server; and
   a plurality of point-of-sale terminals in communication with the product registration server, wherein
   the product registration server is configured to carry out product registration by performing the steps of:

responsive to a first command to start product registration, which is wirelessly transmitted from a user computing device along with a customer ID, generating a transaction file associated with the customer ID in a local data storage of the product registration server, and retrieving a customer record associated with the customer ID from a first data storage region, the customer record including a reference ratio therein;

responsive to a second command including a product ID, which is wirelessly transmitted from the user computing device along with the customer ID after the first command, retrieving a product record associated with the product ID from a second data storage region, the product record including a category ID of the product and an attribute value of the product therein, and registering the product ID in the transaction file;

calculating a first ratio of (A) a sum of attribute values corresponding to registered product IDs associated with one or more category IDs representing particular food categories to (B) a sum of attribute values corresponding to registered product IDs associated with category IDs representing all food categories, and adding the calculated first ratio to the transaction file;

calculating a second ratio of (C) the first ratio to (D) the reference ratio, and adding the calculated second ratio to the transaction file;

generating image data of a graphical user interface (GUI) indicating nutrition balance of registered products at least based on the second ratio in the transaction file, and transmitting the generated image data to the user computing device; and

responsive to a third command to close the product registration, which is wirelessly transmitted from the user computing device along with a point-of-sale (POS) terminal ID, transmitting data in the transaction file to a POS identified by the POS terminal ID, and registering the first ratio and a date when the transaction file was generated in a transaction history record associated with the customer ID.

# FIG. 1

# FIG. 2

START

Act1 LOGGED IN? — NO

Act4 SEND REGISTRATION START REQUEST

Act2 LOG IN

STORE MEMBER ID Act3

Act5 IS PERMISSION RESPONSE RECEIVED?

NO

YES

Act6 START UP CAMERA

(2)

Act7 DISPLAY MAIN SCREEN

Act8 IS THERE CHANGE? — YES

(1)

NO

Act9 IS BARCODE READ? — NO

YES

Act10 TRANSMIT BARCODE DATA

Act11 ARE DATA RECEIVED?

NO

YES

Act12 IS IT HEALTH REPORT? — NO

Act13 ARE DATA END COMMAND? — NO

ANOTHER PROCESSING

YES

YES

Act14 DISPLAY MAIN SCREEN

Act15 ERASE MAIN SCREEN

END

# FIG. 3

```
                    ( 1 )
                      │
                      ▼
Act21 ──┌─────────────────────────┐
        │     REQUEST SETTING      │
        └─────────────────────────┘
                      │
                      ▼
Act22 ──┌─────────────────────────┐
        │  DISPLAY SETTING SCREEN  │
        └─────────────────────────┘
                      │
        Act23         ▼
   YES       ◇ IS IT CANCELLED? ◇
   ◄─────────           │
              │        NO
              │         ▼
        Act24        ◇ IS IT MAXIMUM ◇ ──── YES ──┐
              │      ◇    RANGE?     ◇             │
              │           │                        ▼
              │          NO                  Act26 ┌──────────────────┐
              │           ▼                        │  CHANGE SCREEN   │
        Act25      ◇  IS IT      ◇ ── NO ──►       └──────────────────┘
              │    ◇ DETERMINED? ◇                        │
              │           │                               │
              │          YES                              │
              │           ▼
Act27 ──      ┌─────────────────────────┐
              │     INSTRUCT CHANGE      │
              └─────────────────────────┘
                          │
                          ▼
                        ( 2 )
```

## FIG. 4

```
                    START

Act51    GENERATE TRANSACTION
         FILE

Act52    RESET FLAG INDICATING
         THAT EVALUATION IS BEING
         PERFORMED

Act53    REQUEST MEMBER
         INFORMATION

Act54    STORE MEMBER
         INFORMATION

Act55    TRANSMIT PERMISSION              Act60   CALCULATE REFERECE
         RESPONSE                                 RATIOS

                  Act56                   Act61   TRANSMIT SETTING SCREEN
         IS IT SET?        YES                    DATA

              NO
                  Act57
         IS THERE          YES
         CHANGE?
                                          Act62   CHANGE REFERENCE RATIO
              NO
                  Act58
         IS IT             YES            Act63   TRANSMIT CHANGE
         MERCHANDISE ID?                          INSTRUCTION

              NO
                  Act59
  NO     IS IT POSID?

              YES
                                          Act64   REQUEST MERCHANDISE
Act68    TRANSMIT TRANSACTION                     INFORMATION
         FILE
                                          Act65   CHANGE PURCHASED
                  Act69                           MERCHANDISE LIST
  NO     IS THERE END
         COMMAND?                         Act66
                                                  IS IT FOOD?        NO
              YES
Act70    TRANSMIT END COMMAND                          YES
                                          Act67   PERFORM HEALTH
Act71    ADD HISTORY                              EVALUATION PROCESSING

                    END
```

## FIG. 5

```
        ┌─────────────────────┐
        │ HEALTH EVALUATION   │
        │     PROCESSING      │
        └─────────────────────┘
                  │
                  ▼         Act81
             ╱─────────╲
            ╱  IS IT IN ╲──── NO ──────────────────────┐
            ╲ EVALUATION? ╱                             │              Act82
             ╲─────────╱                                ▼
              YES │                          ┌─────────────────────┐
                  │                          │      A,B←0          │
                  │                          └─────────────────────┘
                  │                                    │
                  │                                    ▼
                  │                          ┌─────────────────────┐
                  │                          │ SET FLAG INDICATING  │
                  │                          │ THAT EVALUATION IS   │
                  │                          │   BEING PERFORMED    │
                  │                          └─────────────────────┘
                  │                                    │      Act83
                  │◄───────────────────────────────────┘
     Act84        │
      ╲           ▼
       ╲─────────────────╲
      ╱  IS IT EVALUATION  ╲──── YES ──────────────────┐
      ╲      TARGET?       ╱                            │   Act86
       ╲─────────────────╱                              ▼
            NO │                          ┌─────────────────────┐
               ▼                          │  ADD WEIGHT TO A,B   │
Act85 ┌─────────────────────┐             └─────────────────────┘
      │   ADD WEIGHT TO A   │                        │
      └─────────────────────┘                        │
               │◄────────────────────────────────────┘
               ▼
Act87 ┌─────────────────────┐
      │   CALCULATE C,D     │
      └─────────────────────┘
               │
               ▼
Act88 ┌─────────────────────┐
      │ UPDATE EVALUATION    │
      │       DATA          │
      └─────────────────────┘
               │
               ▼
Act89 ┌─────────────────────┐
      │ GENERATE HEALTH      │
      │      REPORT         │
      └─────────────────────┘
               │
               ▼
Act90 ┌─────────────────────┐
      │ TRANSMIT HEALTH      │
      │      REPORT         │
      └─────────────────────┘
               │
               ▼
          ┌─────────┐
          │   END   │
          └─────────┘
```

## FIG. 6

```
                    ┌──────────┐
                    │  START   │
                    └──────────┘
                         │
                         ▼
Act101    ┌──────────────────────────────┐
          │   DISPLAY PURCHASED          │
          │   MERCHANDISE LIST           │
          └──────────────────────────────┘
                         │
          ┌──────────────┤
          │              ▼                        Act102
          │      ╱────────────────╲
   NO     │     ╱                  ╲
  ◄───────┤     ╲   IS IT PAID?    ╱
          │      ╲────────────────╱
          │              │
          └──────────────┤ YES
                         ▼
Act103    ┌──────────────────────────────┐
          │   PERFORM PAYMENT            │
          │   PROCESSING                 │
          └──────────────────────────────┘
                         │
                         ▼
Act104    ┌──────────────────────────────┐
          │      ISSUE RECEIPT           │
          └──────────────────────────────┘
                         │
                         ▼
Act105    ┌──────────────────────────────┐
          │   TRANSMIT END COMMAND       │
          └──────────────────────────────┘
                         │
                         ▼
                    ┌──────────┐
                    │   END    │
                    └──────────┘
```

FIG. 7

# FIG. 8

Europäisches
Patentamt

European
Patent Office

Office européen
des brevets

# EUROPEAN SEARCH REPORT

Application Number

EP 17 15 1301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/200480 A1 (HARRIS DAVID N [US] ET AL) 7 September 2006 (2006-09-07) * Paragraphs 9-30, 83-91, 180-212; figures 2,3A,3B,26-30,35-37 * | 1-9 | INV. G06Q30/06 G06Q30/02 |
| X | US 2008/091705 A1 (MCBRIDE JAMES L [US] ET AL) 17 April 2008 (2008-04-17) * paragraph [0038] - paragraph [0080]; figures 1-6; tables 1-12 * * paragraph [0098] - paragraph [0119]; figures 9-17 * | 1-9 | |
| X | US 2009/055199 A1 (YUSUF ANTHONY PAUL [GB]) 26 February 2009 (2009-02-26) * paragraph [0033] - paragraph [0061]; figures * | 1-9 | |
| X | US 2015/032586 A1 (BLACKHURST JASON P [US] ET AL) 29 January 2015 (2015-01-29) * paragraph [0001] - paragraph [0009]; figures * * paragraph [0070] - paragraph [0081]; figures 4,5 * | 1-9 | |
| X | US 6 246 998 B1 (MATSUMORI KUNIHIKO [US]) 12 June 2001 (2001-06-12) * column 1, line 6 - column 4, line 16; figures * * column 6, lines 18-48; figure 2b * | 1-9 | |

TECHNICAL FIELDS SEARCHED (IPC)

G06Q

The present search report has been drawn up for all claims

| Place of search | Date of completion of the search | Examiner |
|---|---|---|
| Munich | 13 June 2017 | Blackley, William |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 1301

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2017

| Patent document cited in search report | | Publication date | Patent family member(s) | | Publication date |
|---|---|---|---|---|---|
| US 2006200480 | A1 | 07-09-2006 | AU 2006218537 A1 | | 08-09-2006 |
| | | | BR PI0608266 A2 | | 16-11-2010 |
| | | | CA 2599692 A1 | | 08-09-2006 |
| | | | CN 101529409 A | | 09-09-2009 |
| | | | EP 1875369 A2 | | 09-01-2008 |
| | | | JP 2008537614 A | | 18-09-2008 |
| | | | KR 20070116037 A | | 06-12-2007 |
| | | | US 2006200480 A1 | | 07-09-2006 |
| | | | WO 2006094086 A2 | | 08-09-2006 |
| US 2008091705 | A1 | 17-04-2008 | CA 2652379 A1 | | 29-11-2007 |
| | | | EP 2022034 A2 | | 11-02-2009 |
| | | | US 2007269557 A1 | | 22-11-2007 |
| | | | US 2008059342 A1 | | 06-03-2008 |
| | | | US 2008091705 A1 | | 17-04-2008 |
| | | | US 2011236862 A1 | | 29-09-2011 |
| | | | US 2012208151 A1 | | 16-08-2012 |
| | | | WO 2007137110 A2 | | 29-11-2007 |
| US 2009055199 | A1 | 26-02-2009 | EP 1828840 A1 | | 05-09-2007 |
| | | | GB 2420428 A | | 24-05-2006 |
| | | | US 2009055199 A1 | | 26-02-2009 |
| | | | WO 2006054100 A1 | | 26-05-2006 |
| US 2015032586 | A1 | 29-01-2015 | US 2015032586 A1 | | 29-01-2015 |
| | | | US 2015066687 A1 | | 05-03-2015 |
| US 6246998 | B1 | 12-06-2001 | GB 2347241 A | | 30-08-2000 |
| | | | JP 4471434 B2 | | 02-06-2010 |
| | | | JP 2000250976 A | | 14-09-2000 |
| | | | JP 2007220143 A | | 30-08-2007 |
| | | | US 6246998 B1 | | 12-06-2001 |

EPO FORM P0459

For more details about this annex : see Official Journal of the European Patent Office, No. 12/82